(19)

Europäisches
Patentamt

European
Patent Office

Office européen
des brevets

(11) **EP 4 699 498 A1**

(12) **EUROPEAN PATENT APPLICATION**

(43) Date of publication:
**25.02.2026   Bulletin 2026/09**

(21) Application number: **25195535.7**

(22) Date of filing: **12.08.2025**

(51) International Patent Classification (IPC):
***A47J 31/52*** *(2006.01)*

(52) Cooperative Patent Classification (CPC):
**A47J 31/525; A47J 31/5255**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.08.2024   CN 202411161667**

(71) Applicant: **Kalerm Technology (Suzhou) Co., Ltd
Suzhou Jiangsu 215134 (CN)**

(72) Inventors:
• **ZHOU, Junjie**
**Suzhou, Jiangsu  215134 (CN)**
• **LIN, Cuiting**
**Suzhou, Jiangsu  215134 (CN)**
• **ZHU, Wang**
**Suzhou, Jiangsu  215134 (CN)**
• **HUANG, Hongjian**
**Suzhou, Jiangsu  215134 (CN)**

(74) Representative: **Winter, Brandl - Partnerschaft
mbB
Alois-Steinecker-Straße 22
85354 Freising (DE)**

(54) **METHOD OF PREPARING DRINKING SOLUTION AND BEVERAGE MACHINE**

(57)    The present application discloses a method of preparing drinking solution and a beverage machine. The method comprises: obtaining an operating current value of a water pump of the beverage machine; determining a current operating parameter value based on the operating current value and a preset calculation rule, wherein the operating parameter value characterizes an extraction condition of the drinking solution, the preset calculation rule includes a predetermined numerical correspondence between the operating parameter value and the operating current value; when the operating parameter value does not meet a preset threshold range, adjusting a device of the beverage machine configured to regulate the operating parameter value to obtain an updated operating parameter value; and performing extraction under a condition corresponding to the updated operating parameter value to obtain the drinking solution. The technical solution of the present application can achieve precise control of the extraction process of the drinking solution at low cost and improve the taste of the produced drinking solution.

```
┌─────────────────────────────────────────────────┐
│ obtaining an operating current value of a water  │──── S210
│ pump of a beverage machine                       │
└─────────────────────────────────────────────────┘
                         │
                         ▼
┌─────────────────────────────────────────────────┐
│ determining a current operating parameter value  │──── S220
│ based on the operating current value and a preset │
│ calculation rule                                  │
└─────────────────────────────────────────────────┘
                         │
                         ▼
┌─────────────────────────────────────────────────┐
│ when the operating parameter value does not meet  │
│ a preset threshold range, adjusting a device of   │──── S230
│ the beverage machine configured to regulate the   │
│ operating parameter value to obtain an            │
│ updated operating parameter value                 │
└─────────────────────────────────────────────────┘
                         │
                         ▼
┌─────────────────────────────────────────────────┐
│ performing extraction under a condition           │──── S240
│ corresponding to the updated operating parameter  │
│ value to obtain the drinking solution             │
└─────────────────────────────────────────────────┘
```

Fig.2

EP 4 699 498 A1

## Description

## TECHNICAL FIELD

The present application relates to the field of beverage machine technology, and specifically relates to a method of preparing drinking solution and a beverage machine.

## BACKGROUND

A water pump and a brewing unit of a beverage machine (for example, a coffee machine) are connected through a pipeline. During the process of extracting a beverage (also can be called a drinking solution), the pipeline pressure and the pipeline flow rate in the pipeline are important extraction conditions affecting beverage quality. Therefore, each type of beverage corresponds to its own optimal pipeline pressure and pipeline flow rate.

However, existing beverage machines lack an effective function for monitoring and regulating the pipeline pressure and the pipeline flow rate, which leads to a certain instability in the quality of an extracted beverage, and an optimal beverage taste cannot be guaranteed. In addition, even if some beverage machines detect the pipeline pressure and the pipeline flow rate through a built-in pressure sensor and a built-in flow meter, yet the pressure sensor and flow meter are high in cost. This increases the whole machine cost of the beverage machine.

## SUMMARY

The present application provides a method of preparing drinking solution and a beverage machine. Various aspects and advantages of the present application will be described in the following description, or will be apparent from the description, or can be learned through the implementation of the present application.

In view of this, the embodiment of the present application provides a method of preparing drinking solution and a beverage machine, which can achieve precise control of the extraction process of the drinking solution at low cost and improve the taste of the produced drinking solution.

In a first aspect, an embodiment of the present application provides a method of preparing drinking solution, comprising: obtaining an operating current value of a water pump of a beverage machine; determining a current operating parameter value based on the operating current value and a preset calculation rule, wherein the operating parameter value characterizes an extraction condition of the drinking solution, the preset calculation rule includes a predetermined numerical correspondence between the operating parameter value and the operating current value; when the operating parameter value does not meet a preset threshold range, adjusting a device of the beverage machine configured to regulate the operating parameter value to obtain an updated operating parameter value; performing extraction under a condition corresponding to the updated operating parameter value to obtain the drinking solution.

In a second aspect, an embodiment of the present application provides a beverage machine, comprising a water pump, a processor and a storage resource configured to store processor-executable instructions. The processor comprises a first obtaining module, a second obtaining module, a regulating module and an extraction module. The first obtaining module is configured to obtain an operating current value of the water pump of the beverage machine. The second obtaining module is configured to determine a current operating parameter value based on the operating current value and a preset calculation rule, wherein the operating parameter value characterizes an extraction condition of the drinking solution, the preset calculation rule includes a predetermined numerical correspondence between the operating parameter value and the operating current value. The regulating module is configured to, when the operating parameter value does not meet a preset threshold range, adjust a device of the beverage machine configured to regulate the operating parameter value to obtain an updated operating parameter value. The extraction module is configured to perform extraction under a condition corresponding to the updated operating parameter value to obtain the drinking solution. The processor is configured to perform the method of preparing drinking solution of the first aspect described above.

In a third aspect, an embodiment of the present application provides a computer program product, comprising a computer program, and when the computer program is executed by a processor, the method of preparing drinking solution of the first aspect described above is implemented.

The embodiment of the present application provides a method of preparing drinking solution and a beverage machine, which obtains the operating current value of the water pump of the beverage machine, and determines the current operating parameter value based on the operating current value and the preset calculation rule. And when the operating parameter value does not meet a preset threshold range, a device of the beverage machine for adjusting the operating parameter value is adjusted to obtain the updated operating parameter value. Then, extraction is performed under a condition corresponding to the updated operating parameter value to obtain a drinking solution. The embodiment of the present application can realize precise control of a drinking solution extraction process with low cost by monitoring the operating current value and adjusting the operating parameter value, and improve the taste of a produced drinking solution.

## BRIEF DESCRIPTION OF THE DRAWINGS

The drawings are used to provide a further understanding of the present disclosure, and constitute a part of the specification, and are used to explain the present disclosure together with the embodiments of the present disclosure, and do not constitute a limitation on the present disclosure. Through describing the detailed exemplary embodiments with reference to the accompanying drawings, the above and other features and advantages will become more apparent to those skilled in the art, in the drawings:

FIG. 1 is a schematic diagram of a beverage machine provided by an exemplary embodiment of the present application.
FIG. 2 is a schematic flowchart of a method of preparing drinking solution provided by an exemplary embodiment of the present application.
FIG. 3 is a schematic diagram of a data table provided by an exemplary embodiment of the present application.
FIG. 4 is a schematic diagram of a parameter calculation model provided by an exemplary embodiment of the present application.
FIG. 5 is a schematic framework diagram of a beverage machine for preparing drinking solution provided by an exemplary embodiment of the present application.

## DETAILED DESCRIPTION

The technical solutions in the embodiments of the present application will be described clearly and completely below with reference to the drawings in the embodiments of the present application. Obviously, the described embodiments are only a part of the embodiments of the present application, not all of the embodiments.

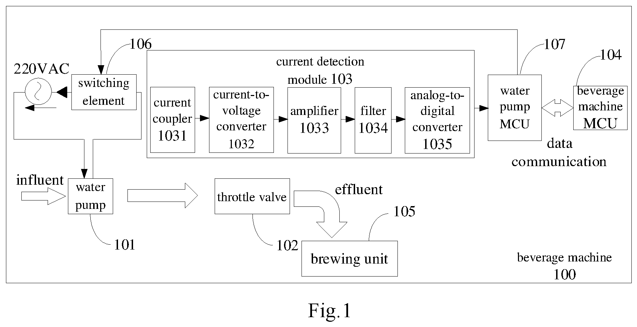

FIG. 1 is a schematic diagram of a beverage machine provided by an exemplary embodiment of the present application, to illustrate the structural composition of the beverage machine. The beverage machine is also called a beverage device. The beverage machine includes but is not limited to a coffee machine or a tea machine, etc.

As shown in FIG. 1, the beverage machine 100 may comprise a water pump 101, a throttle valve 102, a current detection module 103, a beverage machine microcontroller unit (MCU) 104, a brewing unit 105, a switching element 106 and a water pump MCU 107. The current detection module 103 comprises a current coupler 1031, a current-to-voltage converter 1032 and an analog signal processing module. The analog signal processing module may comprise an amplifier 1033, a filter 1034 and an analog-to-digital converter 1035.

It should be noted that the throttle valve 102 may be provided between the water pump 101 and the brewing unit 105 of the beverage machine 100, or the throttle valve 102 may not be provided, which is not specifically limited in the embodiments of the present application. The water pump 101 may be an AC water pump, a DC water pump or a gear pump. The throttle valve 102 is provided on a pipeline between the water pump 101 and the brewing unit 105, and a liquid flow rate in the pipeline can be dynamically adjusted by adjusting the throttle valve 102. It can be understood that a beverage machine usually has a plurality of water pumps 101, and different water pumps 101 have different functions. A function of the water pump 101 in the present application is to supply water for extracting the drinking solution to the brewing unit 105 through a pipeline.

The current detection module 103 and the water pump MCU 107 can be connected in series in an operating circuit of the water pump 101. The current detection module 103 and the water pump MCU 107 can be configured to detect an operating current value of the water pump 101. Further, the current detection module 103 can couple a strong electric current to a weak electric area, and the operating current value flowing through the water pump 101 is accurately collected by the water pump MCU 107.

In an embodiment, a function of the water pump MCU 107 may also be integrated into the beverage machine microcontroller unit (MCU) 104, that is, the water pump 101 may be not required to be equipped with an independent MCU, so as to simplify the arrangement of a hardware circuit. For example, the current coupler 1031 can sense the operating current value of the water pump 101 according to a fixed proportional coefficient. And the proportional coefficient is k, and an operating current value of the water pump 101 is $I_1$, then an operating current value sensed by the current coupler 1031 is $I_2=k*I_1$. The current coupler 1031 may be a hall current sensor or a current transformer.

The current-to-voltage converter 1032 can convert a current signal sensed by the current coupler 1031 into a voltage signal. The processing process can be realized by connecting a sampling resistor in parallel. It is assumed that a resistance value of the sampling resistor is $R_1$, then an output voltage value is $R_1*I_2$.

It should be noted that the current-to-voltage converter 1032 outputs a half-wave voltage signal to the amplifier 1033 of the analog signal processing module.

The converted half-wave voltage signal is amplified by a proper multiple by the amplifier 1033 and output to the filter 1034, then the filter 1034 converts the amplified half-wave voltage signal into a DC voltage signal and outputs the DC voltage signal to the analog-to-digital converter 1035, and the analog-to-digital converter 1035 can convert the DC voltage signal into DC voltage data (for example, binary voltage data) that can be processed by the water pump MCU 107 and output the DC voltage data to the water pump MCU 107. Finally, the water pump MCU 107 can deduce the operating current value of the water pump 101 based on the DC voltage data output by the analog-to-digital converter 1035.

The drinking solution is extracted by the brewing unit 105 of the beverage machine, and a pipeline is connected between the water pump 101 and the brewing unit 105. In the process of extracting the drinking solution, a pipeline pressure (a liquid pressure in the pipeline, which may also be called an extraction pressure) and a pipeline flow rate (a liquid flow rate in the pipeline, which may also be called an extraction flow rate) of the pipeline connected between the water pump 101 and the brewing unit 105 characterize an extraction condition of the drinking solution and are important factors affecting the quality of the produced drinking solution. Therefore, in order to ensure an optimal extraction effect, the pipeline pressure and the pipeline flow rate are factors to be considered for extraction. And extraction of each drinking solution corresponds to respective optimal pipeline pressure and pipeline flow rate.

However, at present, some beverage machines usually lack an effective means to accurately monitor and adjust parameters such as the pipeline pressure and the pipeline flow rate, which leads to instability in the quality of the drinking solution in an extraction process, and thus it is impossible to ensure that the taste of the produced drinking solution is an optimal taste.

In addition, in order to ensure that drinking solutions with various tastes can be extracted, some beverage machines at present usually need to have a built-in pressure sensor and a built-in flow meter to detect the pipeline pressure and the pipeline flow rate. Specifically, the pipeline pressure is detected by the pressure sensor, and the pipeline flow rate is detected by the flow meter. In this way, although the detection of the pipeline pressure and the pipeline flow rate is realized, the cost of the pressure sensor and the flow meter is high, which increases the whole machine cost of the beverage machine.

In view of the above problems, an embodiment of the present application provides a method of preparing drinking solution, which can realize detection of the pipeline pressure and the pipeline flow rate without the built-in pressure sensor and the built-in flow meter, thereby realizing precise control of a drinking solution extraction process with low cost, so as to improve the taste and stability of the produced drinking solution.

Hereinafter, various non-limiting embodiments of the present application will be described in detail with reference to the accompanying drawings.

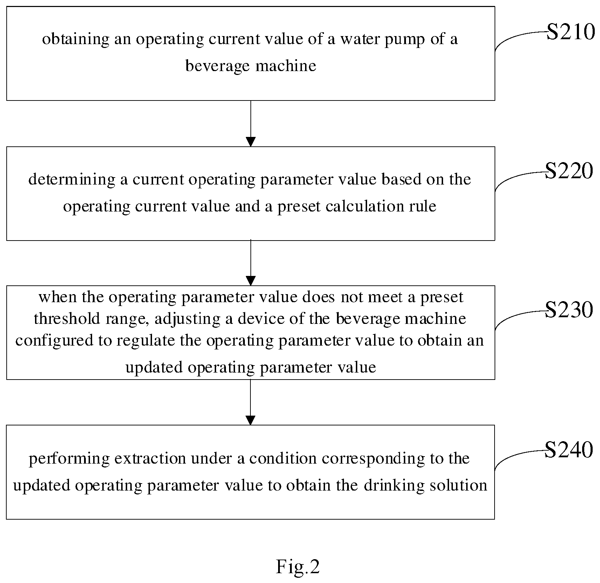

FIG. 2 is a schematic flowchart of a method of preparing drinking solution provided by an exemplary embodiment of the present application. The method of FIG. 2 is performed by a computer device, for example, a beverage machine (or the water pump MCU 107 shown in FIG. 1). As shown in FIG. 2, the method for making the drinking solution comprises the following content.

S210: obtaining an operating current value of a water pump 101 of a beverage machine 100.

For example, the beverage machine 100 may include a current detection module (for example, the current detection module 103 in FIG. 1). The current detection module 103 is configured to detect the operating current value of the water pump 101. For example, the operating current value flowing through the water pump 101 is detected by the current detection module 103 of the beverage machine 100.

S220: determining a current operating parameter value based on the operating current value and a preset calculation rule.

In an embodiment, the operating parameter value characterizes an extraction condition of the drinking solution.

The preset calculation rule includes a predetermined numerical correspondence between the operating parameter value and the operating current value. For example, the operating current value and the operating parameter value satisfy the preset calculation rule, that is, different operating current values correspond to different operating parameter values. The operating parameter value may comprise a pipeline pressure value (a value of a liquid pressure in a pipeline between the water pump 101 and a brewing unit 105, i.e. a value of a pipeline pressure) and a pipeline flow rate value (a value of a liquid flow rate in the pipeline between the water pump 101 and the brewing unit 105, i.e. a value of a pipeline flow rate), etc.

The preset calculation rule includes a predetermined numerical correspondence between the pipeline pressure value and/or the pipeline flow rate value and the operating current value. For example, the operating current value, the pipeline pressure value and the pipeline flow rate value satisfy the preset calculation rule. For example, the operating current value, the pipeline pressure value and the pipeline flow rate value satisfy the preset calculation rule. Or, the operating current value and the pipeline pressure value satisfy the preset calculation rule. Or, the operating current value and the pipeline flow rate value satisfy the preset calculation rule.

And the pipeline pressure value can indicate a pressure magnitude in the pipeline between the water pump 101 and the brewing unit 105, and the pipeline flow rate value can indicate a flow rate magnitude in the pipeline between the water pump 101 and the brewing unit 105.

The pipeline pressure value is basically consistent with an extraction pressure value of the brewing unit 105, and the pipeline flow rate value is consistent with an extraction flow rate value of the brewing unit 105. The brewing unit 105 performs extraction under an extraction condition corresponding to the extraction pressure value and the extraction flow rate value to obtain the drinking solution.

In an embodiment, the operating current value is input into a parameter calculation model to obtain the operating parameter value. The parameter calculation model may be a neural network model obtained through training. It should be noted that when the parameter calculation model is used to output the operating parameter value corresponding to the operating current value, it can be understood that the preset calculation rule satisfied between the operating current value and the operating parameter value at this time can be represented by a function in the parameter calculation model.

In another embodiment, the operating parameter value corresponding to the operating current value is determined based on a preset correspondence relationship. The preset correspondence relationship indicates a correspondence between the operating current value and the operating parameter value; and the preset correspondence relationship may be specifically a data table. It should be noted that when the data table is used to determine the operating parameter value corresponding to the operating current value, it can be understood that the preset calculation rule satisfied between the operating current value and the operating parameter value at this time can be represented by the data table.

For example, a data table is queried based on the operating current value, and the operating parameter value corresponding to the operating current value is determined by interpolation calculation, wherein the data table is used for recording the correspondence relationship between the operating current value and the operating parameter value.

It should be noted that for a specific description of this step, please refer to the description of the following embodiments.

S230: when the operating parameter value does not meet a preset threshold range, adjusting a device of the beverage machine 100 for adjusting the operating parameter value to obtain an updated operating parameter value.

For example, the preset threshold range may be a numerical value range flexibly set according to an actual situation, each drinking solution may correspond to a respective preset threshold range, and the preset threshold range may be in one-to-one correspondence with the operating parameter value. The operating parameter value comprises a pipeline pressure value and a pipeline flow rate value, and accordingly, the preset threshold range may comprise a corresponding preset pressure range and a preset flow rate range. For example, when the operating parameter value is the pipeline pressure value, the preset threshold range may be a preset pressure range for pressure; and when the operating parameter value is the pipeline flow rate value, the preset threshold range may be a preset flow rate range for flow rate.

In an embodiment, when the operating parameter value is out of the preset threshold range, the device is adjusted to make the operating parameter value meet the preset threshold range. The beverage machine 100 may comprise a device for adjusting the operating parameter value, such as the water pump 101 and/or the throttle valve 102.

For example, for a beverage machine 100 in which no throttle valve 102 is provided between the water pump 101 and the brewing unit 105, adjusting the device of the beverage machine 100 for adjusting the operating parameter value may be specifically adjusting the water pump 101 of the beverage machine 100. When the water pump 101 is an AC water pump, adjusting the AC water pump of the beverage machine 100 may be specifically: adjusting a frequency chopping control parameter or a phase chopping control parameter of the AC water pump. When the water pump 101 is a DC water pump, adjusting the DC water pump of the beverage machine 100 may be specifically: adjusting a voltage parameter of the DC water pump. When the water pump 101 is a gear pump, adjusting the gear pump of the beverage machine 100 may be specifically: adjusting a rotation speed parameter of the gear pump.

Adjusting a control/working parameter of the water pump 101 can change a pumping speed of the water pump, for example, and then can change the pipeline pressure and the pipeline flow rate in the pipeline between the water pump 101 and the brewing unit 105. Correspondingly, the brewing unit 105 performs extraction of the drinking solution under the changed extraction pressure and extraction flow rate.

For another example, for a beverage machine 100 with a throttle valve 102 set between the water pump 101 and the brewing unit 105, adjusting the device of the beverage machine 100 for adjusting the operating parameter value may be specifically adjusting the throttle valve 102 of the beverage machine 100. Adjusting the throttle valve 102 of the beverage machine 100 may be specifically: adjusting a throttling parameter of the throttle valve 102.

S240: performing extraction under a condition corresponding to the updated operating parameter value to obtain the drinking solution.

For example, the updated operating parameter value is compared with the preset threshold range again, and when it is detected that the updated operating parameter value meets the preset threshold range, the drinking solution is extracted, so as to complete the production of the drinking solution. The drinking solution may be a coffee beverage.

It should be noted that in order to precisely control the extraction process of the drinking solution, steps S210 to S240 can be repeatedly executed, and the number of times and conditions of iteration are not specifically limited in the embodiments of the present application.

It can be seen that, the embodiment of the present application obtains the operating current value of the water pump 101 of the beverage machine 100, and determines the current operating parameter value based on the operating current value and the preset calculation rule. When the operating parameter value does not meet the preset threshold range, the device of the beverage machine 100 for adjusting the operating parameter value is adjusted to obtain the updated operating parameter value. Then, extraction is performed under a condition corresponding to the updated operating parameter value to obtain the drinking solution. The embodiment of the present application can realize precise control of an extraction process of the drinking solution at a low cost by monitoring the operating current value and adjusting the operating parameter value, so as to improve the taste of the produced drinking solution.

In an embodiment of the present application, the drinking solution is extracted by the brewing unit 105 of the beverage machine 100, and a pipeline is connected between the water pump 101 and the brewing unit 105. The operating parameter value comprises a pipeline pressure value and/or a pipeline flow rate value of the pipeline connected between the brewing unit 105 and the water pump 101.

In some embodiments, the operating parameter value may comprise the pipeline pressure value and the pipeline flow rate value of the pipeline between the water pump 101 and the brewing unit 105; in other embodiments, the operating parameter value may comprise the pipeline pressure value of the pipeline between the water pump 101 and the brewing unit 105; in still other embodiments, the operating parameter value may comprise the pipeline flow rate value of the pipeline between the water pump 101 and the brewing unit 105; which is not specifically limited in the embodiments of the present application.

It can be seen that the embodiments of the present application realize precise control of a drinking solution extraction process by monitoring the operating current value, adjusting the pipeline pressure value and adjusting the pipeline flow rate value.

In an embodiment of the present application, the operating current value is obtained by the current detection module 103 of the beverage machine 100. The current detection module 103 comprises a current coupler 1031, a current-to-voltage converter 1032 and an analog signal processing module.

In an embodiment of the present application, the preset calculation rule comprises a parameter calculation model, and determining the current operating parameter value based on the operating current value and the preset calculation rule comprises: inputting the operating current value into the parameter calculation model to obtain the operating parameter value.

For example, the parameter calculation model may be a linear regression model, a general model, etc., which is not specifically limited in the embodiments of the present application. The linear regression model may be a multiple linear regression model. The general model may be a deep neural network (DNN), etc.

For example, the parameter calculation model may be a multiple linear regression model, etc. In other words, the embodiments of the present application may describe the preset calculation rule satisfied among the operating current, the pipeline pressure and the pipeline flow rate by using the multiple linear regression model.

In an embodiment, an operating current value is input into a pre-trained parameter calculation model to obtain a corresponding pipeline pressure value and/or pipeline flow rate value. For example, current waveform data corresponding to the operating current value is input into the parameter calculation model to obtain the corresponding pipeline pressure value and pipeline flow rate value. That is, an input of the parameter calculation model is the operating current value, and an output is the operating parameter value (i.e., the pipeline pressure value and/or the pipeline flow rate value).

It should be noted that the embodiments of the present application establish a mathematical model (i.e., a parameter calculation model) through a mapping relationship among the operating current of the water pump 101, the pipeline pressure and the pipeline flow rate, so that the mathematical model can be applied to any beverage machine 100. The beverage machine 100 may be a semi-automatic beverage machine or a fully-automatic beverage machine. According to application occasions, the semi-automatic beverage machine and the fully-automatic beverage machine can be classified into a commercial beverage machine, a business beverage machine or a household beverage machine.

It can be seen that the embodiments of the present application construct the parameter calculation model based on the relationship among an operating current, the pipeline pressure and the pipeline flow rate, and directly apply the parameter calculation model to the beverage machine 100. Compared with obtaining a pipeline pressure by a traditional pressure sensor and obtaining a pipeline flow rate by a flow meter, the embodiments of the present application reduce the cost of obtaining the pipeline pressure and the pipeline flow rate, and improve the performance of the beverage machine 100 in calculating the pipeline pressure and the pipeline flow rate.

In an embodiment of the present application, the operating current value comprises current waveform data of an operating current of the water pump 101, and the parameter calculation model comprises a multiple linear regression model.

For example, the operating current value can be represented by current waveform data, and the current waveform data of the water pump 101 can be used as an input of the parameter calculation model.

In one embodiment, the multiple linear regression model can be represented by the following formula (1):

$$F = a*I + b*P + c \qquad (1)$$

wherein, I is the operating current value of the water pump 101 (unit can be mA); P is the pipeline pressure value (unit can be bar); F is the pipeline flow rate value (unit can be mL/s); and a, b and c are constant coefficients of the multiple linear regression model.

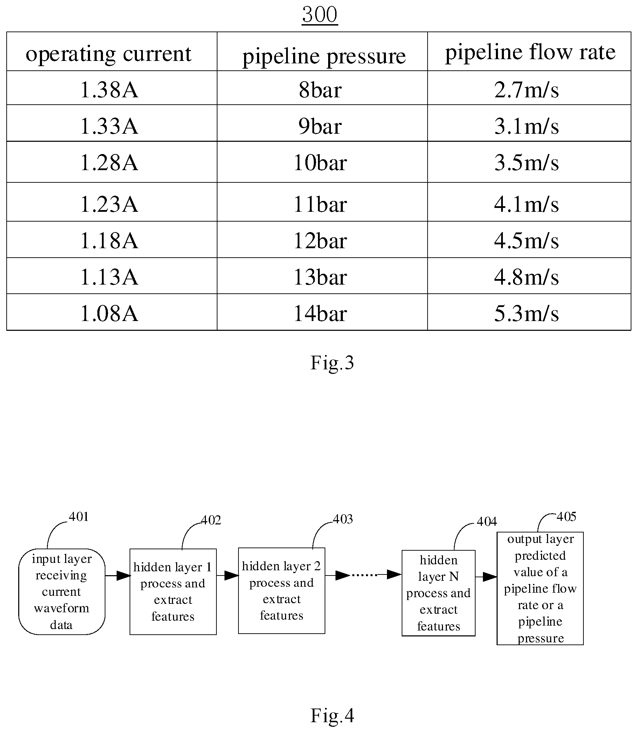

For example, taking a certain water pump as an example, according to model coefficients a, b and c calculated from the data table shown in FIG. 3, formula (1) becomes formula (2):

$$F=0.68I+0.05P+2.12 \qquad (2)$$

wherein, I is the operating current value of the water pump 101 (unit may be mA); P is the pipeline pressure value (unit may be bar); F is the pipeline flow rate value (unit may be mL/s). It should be noted that the embodiments of the present application do not specifically limit a manner of calculating the coefficients a, b and c.

It can be seen that the embodiments of the present application output a pipeline pressure value and a pipeline flow rate value in real time or non-real time through current waveform data in a working process of the water pump 101 and a multiple linear regression model, so as to realize monitoring of a working state of the beverage machine 100, thereby providing data for optimizing an extraction condition of a drinking solution, so as to realize precise control of a working process of the beverage machine 100.

In an embodiment of the present application, before the operating current value is input into the parameter calculation model to obtain the operating parameter value, the method for making the drinking solution further comprises: obtaining a sample data set, and the sample data set comprises a plurality of groups of operating current sample data and corresponding operating parameter sample data. The operating current sample data is used as an input of an initial calculation model, and the corresponding operating parameter sample data is used as an expected output of the initial calculation model, and parameter calculation constraint training is performed on the initial calculation model to obtain the parameter calculation model.

In an embodiment, the sample data set can be obtained in the following manner: the liquid flow rate in the pipeline between the water pump 101 and the throttle valve 102 is adjusted by controlling the throttle valve 102, so as to collect the sample data set. And the throttle valve 102 is disposed downstream of the water pump 101, the operating current sample data is obtained by a current sampling module, and the operating parameter sample data is obtained by a pressure sensor and/or a flow meter.

For example, in order to obtain the sample data set, a throttle valve 102 can be arranged downstream of the water pump 101, a simple water circuit composed of the water pump 101 and the throttle valve 102 is built, and a current sampling module is connected in series in an operating circuit of the water pump 101. When the water pump 101 is kept on (i.e., in a pumping state), a liquid flow rate in a pipeline between the water pump 101 and the throttle valve 102 is dynamically adjusted by adjusting the throttle valve 102, so as to collect the operating current value of the water pump 101 through the current sampling module, collect a pipeline pressure value between the water pump 101 and the throttle valve 102 by the pressure sensor, and collect a pipeline flow rate value between the water pump 101 and the throttle valve 102 through the flow meter.

For example, the current sampling module can be understood as the current detection module 103 shown in FIG. 1. The current sampling module can comprise a current coupler 1031, a current-to-voltage converter 1032 and an analog signal processing module, and the analog signal processing module can comprise an amplifier 1033, a filter 1034 and an analog-to-digital converter 1035.

It should be noted that the operating current value of the water pump 101 can be obtained through the current sampling module or collected through an oscilloscope. The embodiments of the present application do not make a specific limitation on the manner of obtaining the operating current value.

Optionally, a plurality of groups of collected operating current values are taken as operating current sample data, and a plurality of groups of collected pipeline pressure values and pipeline flow rate values are taken as operating parameter sample data. Then, a sample data set is constructed based on the operating current sample data and the corresponding operating parameter sample data to train the parameter calculation model. It should be noted that the embodiments of the present application can also perform preprocessing on the collected sample data set to improve the prediction accuracy of the parameter calculation model. The preprocessing comprises denoising, normalization and other operations.

Optionally, the sample data set is used to train the initial calculation model to obtain a required parameter calculation model. That is, a large amount of current waveform data of the water pump 101 under different working conditions and corresponding pipeline pressure values and pipeline flow rate values are used to perform model training on the initial calculation model to obtain the parameter calculation model. In addition, the embodiments of the present application can also adopt a back propagation algorithm to continuously adjust model parameters of the obtained parameter calculation model, so as to minimize a prediction error and improve the calculation accuracy of the parameter calculation model.

In one embodiment, referring to FIG. 4, the parameter calculation model can include an input layer 401, multiple hidden layers (for example, a hidden layer 402, a hidden layer 403 and a hidden layer 404, etc.) and an output layer 405. The input layer 401 is configured to receive current waveform data during an operation of the water pump 101. The hidden layer is configured to process and extract features of the received current waveform data. The output layer 405 is configured to generate a predicted value of a pipeline flow rate and/or a pipeline pressure, that is, to predict the pipeline flow rate and/or the pipeline pressure, to generate a pipeline flow rate value and/or a pipeline pressure value.

It should be noted that, in a process of applying the parameter calculation model to work, the current waveform data of the operating current of the water pump 101 is input into the trained parameter calculation model in real time, and the predicted values of the pipeline pressure and the pipeline flow rate are output. The predicted values are obtained in real time, so that the monitoring of the working state (extraction process) of the beverage machine 100 is realized, and the water pump 101 or other devices for adjusting the operating parameter value can be further dynamically adjusted based on the predicted values, so as to optimize the extraction process (for example, a coffee extraction process) and ensure the quality of the drinking solution.

It can be seen that the embodiments of the present application obtain the required parameter calculation model by collecting the sample data set to train an initial calculation model. The parameter calculation model can output the pipeline pressure value and the pipeline flow rate value based on current waveform data, which provides data support for precisely controlling the drinking solution extraction process.

In an embodiment of the present application, the preset calculation rule comprises a preset correspondence relationship, and determining the current operating parameter value based on the operating current value and the preset calculation rule comprises: determining an operating parameter value corresponding to the operating current value based on the preset correspondence relationship. The preset correspondence relationship indicates a correspondence relationship between the operating current value and the operating parameter value.

In an embodiment, the preset correspondence relationship is determined in the following manner: adjusting a liquid flow rate in a pipeline between the water pump 101 and the throttle valve 102 by controlling the throttle valve 102 to obtain a plurality of operating current sample data under different liquid flow rate conditions. And the throttle valve 102 is disposed downstream of the water pump 101, and the operating current sample data is obtained by a current sampling module; obtaining a plurality of operating parameter sample data corresponding to the plurality of operating current sample data. And the operating parameter sample data is obtained by a pressure sensor and/or a flow meter; constructing the preset correspondence relationship based on the plurality of operating current sample data and the corresponding plurality of operating parameter sample data.

In one embodiment, the preset correspondence relationship comprises a data table, and determining the operating parameter value corresponding to the operating current value based on the preset correspondence relationship comprises: determining the corresponding operating parameter value through interpolation calculation based on the operating current value and the data table.

It should be noted that the construction of a simple water circuit composed of the water pump 101 and the throttle valve 102 and the collection of operating current sample data and operating parameter sample data are the same as those described above. A process of recording the operating current, the pipeline pressure value and the pipeline flow rate value can be understood as a process of data collection in a preliminary stage of constructing a data table.

For example, a data table is queried based on the operating current value to obtain an operating parameter value corresponding to the operating current value. The data table is used for recording a correspondence relationship between the operating current value and the operating parameter value. For an operating current value not recorded in the data table, a corresponding operating parameter value can be determined by interpolation calculation.

A plurality of operating current values under different liquid flow rate conditions in a pipeline connected between the water pump 101 and the throttle valve 102, and an operating parameter value corresponding to each operating current value are obtained. The operating parameter value comprises a pipeline pressure value obtained by a pressure sensor and a pipeline flow rate value obtained by a flow meter. Then, a data table is constructed in advance based on the operating parameter value corresponding to each operating current value, and the data table is stored in the beverage machine 100. For example, FIG. 3 is a data table 300 constructed by taking a certain water pump 101 as an example, and the data table 300 reflects a correspondence relationship among an operating current of the water pump 101, a pipeline pressure value and a pipeline flow rate value.

Optionally, in a practical application process, after the operating current value of the water pump 101 is obtained, a data table stored in the beverage machine 100 can be called, and a pipeline pressure value and a pipeline flow rate value matched with the operating current value are obtained by querying the data table. It should be noted that, for an operating current value not recorded in the data table, a corresponding pipeline pressure value and a corresponding pipeline flow rate value can be determined by interpolation calculation.

For example, referring to FIG. 3, if the currently detected operating current value is 1.18A, then a pipeline pressure value of 12 bar and a pipeline flow rate value of 4.5 m/s corresponding to the operating current value of 1.18A are obtained by querying the data table 300.

For another example, referring to FIG. 3, if a currently detected operating current value is 1.17A (which is an operating current value not recorded in the data table), then interpolation calculation is performed based on data corresponding to 1.18A (a corresponding pipeline pressure value is 12 bar, and a corresponding pipeline flow rate value is 4.5 m/s) and 1.13A (a corresponding pipeline pressure value is 13 bar, and a corresponding pipeline flow rate value is 4.8 m/s) recorded in the data table, so as to obtain that a pipeline pressure value corresponding to the operating current value of 1.17A is 12.2 bar and a pipeline flow rate value is 4.56 m/s.

It can be seen that the embodiments of the present application realize precise control of a working process of the beverage machine 100 and improve the taste of a produced drinking solution by constructing a data table and clarifying the correspondence relationship among an operating current, a pipeline pressure and a pipeline flow rate.

It should be noted that after the operating current value, the pipeline pressure value and the pipeline flow rate value are obtained, the pipeline pressure value and the pipeline flow rate value corresponding to each operating current value in a plurality of operating current values are determined, that is, the correspondence relationship among each operating current value, the pipeline pressure value and the pipeline flow rate value is determined one by one. It should be noted that the embodiments of the present application can apply technologies such as statistics and machine learning to find a relationship among the operating current of the water pump 101, the pipeline pressure and the pipeline flow rate. Then, the pipeline pressure value and the pipeline flow rate value corresponding to each operating current value are summarized to construct a data table, for example, the data table 300 shown in FIG. 3.

It can be seen that the embodiment of the present application lays a foundation for precisely controlling the extraction process of the drinking solution by monitoring the operating current value and adjusting the operating parameter value by constructing a data table and clarifying the correspondence relationship among the operating current, the pipeline pressure and the pipeline flow rate.

In an embodiment of the present application, obtaining the operating current value of the water pump 101 of the beverage machine 100 comprises: obtaining the operating current value of the water pump 101 at a preset time interval.

For example, the preset time interval may be 10 ms-30 ms, such as 10 ms, 20 ms or 30 ms, etc., and the time interval may be flexibly set according to an actual situation. It should be noted that, the smaller the preset time interval is, the shorter the time interval for collecting the operating current value is, and the closer to real-time collection.

Preferably, in the embodiment of the present application, the preset time interval is set to 20 ms.

For example, the operating current value of the water pump 101 is obtained at an interval of 20 ms, that is, the operating current value of the water pump 101 is obtained once every 20 ms.

It can be seen that the embodiment of the present application collects an operating current in an interval collecting manner, which can not only realize dynamic detection of a pipeline pressure and a pipeline flow rate, but also save certain computing power.

In an embodiment of the present application, after obtaining the operating current value of the water pump 101 of the beverage machine 100, the method of preparing drinking solution further comprises: determining whether the operating current value exceeds a preset current range; when the operating current value exceeds the preset current range, determining that the water pump 101 is in an abnormal working state and then sending a warning message.

It should be noted that, due to the lack of an effective fault detection and early warning mechanism for the water pump 100 at present, abnormal conditions such as short circuit and open circuit of the water pump 101 itself, blockage of a pipeline at a front end of the water pump 101 or blockage of a pipeline at a rear end of the water pump 101 cannot be found and handled in time, thereby affecting the normal operation of the beverage machine 100.

For example, after obtaining an actual operating current value of the water pump 101, the water pump MCU 107 can determine whether the operating current value exceeds a preset current range. When it is detected that the operating current value exceeds the preset current range, it is determined that a current working state of the water pump 101 is an abnormal working state. The water pump MCU 107 sends an alarm message to prompt that the working state of the water pump 101 is abnormal, so as to remind an operation and maintenance person to handle an abnormal fault in time. The alarm message may be sent by popping up a prompt box or flashing a screen in a user's operation interface, or playing an alarm sound, etc., which is not limited in the present application.

It should be noted that the preset current range can be flexibly set according to an actual situation, and the preset current range can be prestored in the water pump MCU 107 and belongs to a preset parameter. In addition, in an abnormal situation such as a short circuit or an open circuit of the water pump 101 itself, a blockage of a pipeline at a front end of the water pump 101 or a blockage of a pipeline at a rear end, an actual operating current value of the water pump 101 exceeds the preset current range.

It can be seen that the embodiment of the present application sends an alarm message when the working state of the water pump 101 is abnormal, so that a user can take maintenance measures in time, the water pump 101 is prevented from being damaged due to long-time abnormal work, the effect of early warning is achieved, and the normal operation of the beverage machine 100 is ensured.

In an embodiment of the present application, a device configured to regulate an operating parameter value comprises the water pump 101 and/or the throttle valve 102. When the operating parameter value does not meet a preset threshold range, adjusting a device of the beverage machine 100 configured to regulate the operating parameter value to obtain an updated operating parameter value comprises: when the operating parameter value exceeds the preset threshold range, adjusting the water pump 101 and/or the throttle valve 102 to obtain an updated operating current value. The updated operating parameter value is determined based on the updated operating current value and the preset calculation rule, until the updated operating parameter value is within the preset threshold range.

For example, when the operating parameter value is greater than or less than the preset threshold range, an updated operating current value is obtained by adjusting the device for adjusting the operating parameter value. Then, the updated operating parameter value is determined according to the updated operating current value and the preset calculation rule (i.e., a parameter calculation model or a data table), until the updated operating parameter value is within a preset threshold range, and the updated operating parameter value falling within the preset threshold range is used as a parameter value applied to extraction. When the updated operating parameter value is within the preset threshold range, working parameters of the device for adjusting the operating parameter value are maintained, so as to maintain a current operating current value of the water pump 101, and steps S210, S220, S230 and S240 are cyclically executed until the production of the drinking solution is completed.

It should be noted that, for the description of the preset calculation rule, please refer to the description of the embodiment of FIG. 2. And "until the updated operating parameter value is within the preset threshold range" can be understood as a repeated iterative process, and the iterative process is ended until the updated operating parameter value is within the preset threshold range.

In one embodiment, the device configured to regulate the operating parameter value may be the water pump 101 and/or the throttle valve 102 included of the beverage machine 100.

For example, a beverage machine 100 comprising an AC water pump is taken as an example. In a case that a pipeline pressure value and/or a pipeline flow rate value determined based on an operating current value of the water pump 101 is larger than a preset threshold range, a frequency chopping control parameter or a phase chopping control parameter of the water pump 101 is subjected to reverse closed-loop adjustment to obtain an updated operating current value. Then, the updated operating current value is input into the parameter calculation model again to obtain an updated pipeline pressure value and/or an updated pipeline flow rate value. And when the updated pipeline pressure value is within a preset pressure range and/or the updated pipeline flow rate value is within a preset flow rate range, extraction is performed under an extraction condition of the updated pipeline pressure value and/or the updated pipeline flow rate value to obtain a required drinking solution.

Reverse closed-loop adjustment is to adjust a control parameter of the water pump 101 according to a comparison result, so that an operating parameter value meets a preset threshold range; it is a negative feedback adjustment for realizing closed-loop control through reverse adjustment.

It can be understood that adjusting the frequency chopping control parameter or the phase chopping control parameter of the water pump 101 can change the pumping speed of the water pump 101, and thus can change the pressure of the pipeline and the flow rate of the pipeline. At this time, the operating current value of the water pump 101 is updated, and the operating parameter value determined based on the preset calculation rule is also updated accordingly.

It can be seen that the embodiment of the present application realizes precise control of an extraction process by comparing a pipeline pressure and a pipeline flow rate with a preset threshold and dynamically adjusting the operating current value of the beverage machine 100.

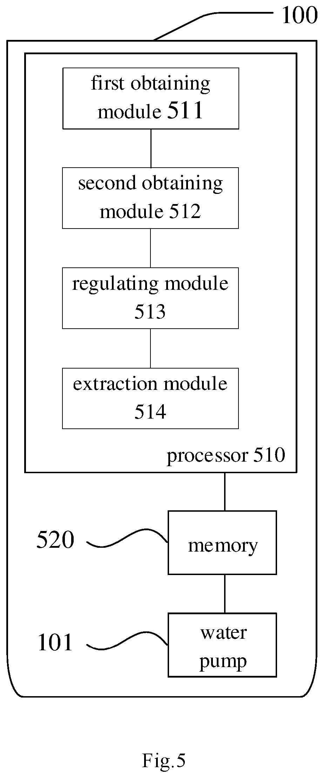

FIG. 5 is a framework diagram of a beverage machine 100 for preparing drinking solution according to an exemplary embodiment of the present application. The beverage machine 100 includes a processor 510, a storage resource and a water pump 101. A memory 520 is a representative of the storage resource, configured to store instructions executable by the processor 510. For example, the instructions are an application program. The application program stored in the memory 520 may comprise a module corresponding to a set of instructions. Or the application program stored in the memory 520 may comprise more than one module, and each module corresponds to a set of instructions. In addition, the processor 510 is configured to execute the instructions to implement the above-mentioned method of preparing drinking solution.

The beverage machine 100 may also include a power component configured to perform power management of the beverage machine 100.

The beverage machine 100 may also include a wired or wireless network interface configured to connect the beverage machine 100 to a network.

The beverage machine 100 may also include an input/output (I/O) interface. The beverage machine 100 may be operated based on an operating system stored in the memory 520, for example, Windows Server™, Mac OS X™, Unix™, Linux™, FreeBSD™, or the like.

In one embodiment, the processor 510 comprises a first obtaining module 511, a second obtaining module 512, a regulating module 513 and an extraction module 514.

The first obtaining module 511 is configured to obtain the operating current value of the water pump 101 of the beverage machine 100. The second obtaining module 512 is configured to determine the current operating parameter value based on the operating current value and the preset calculation rule, wherein the operating parameter value characterizes an extraction condition of the drinking solution. The regulating module 513 is configured to, when the operating parameter value does not meet a preset threshold range, adjust a device of the beverage machine 100 configured to regulate the operating parameter value to obtain an updated operating parameter value. The extraction module 514 is configured to perform extraction under a condition corresponding to the updated operating parameter value to obtain the drinking solution.

The embodiment of the present application provides a beverage machine 100, which obtains the operating current value of the water pump 101 of the beverage machine 100, and determines the current operating parameter value based on the operating current value and the preset calculation rule. And when the operating parameter value does not meet a preset threshold range, a device of the beverage machine 100 for adjusting the operating parameter value is adjusted to obtain the updated operating parameter value. Then, extraction is performed under a condition corresponding to the updated operating parameter value to obtain a drinking solution. The embodiment of the present application can realize precise control of a drinking solution extraction process with low cost by monitoring the operating current value and adjusting the operating parameter value, and improve the taste of a produced drinking solution.

According to an embodiment of the present application, the drinking solution is extracted by a brewing unit 105 of the beverage machine 100, and a pipeline is connected between the water pump 101 and the brewing unit 105. The operating parameter value comprises a pipeline pressure value and/or a pipeline flow rate value of the pipeline.

According to an embodiment of the present application, the operating current value is obtained by the current detection module 103 of the beverage machine 100. The current detection module 103 comprises a current coupler 1031, a current-to-voltage converter 1032 and an analog signal processing module.

According to an embodiment of the present application, the preset calculation rule comprises a parameter calculation model. The second obtaining module 512 is configured to input the operating current value into the parameter calculation model and obtain the operating parameter value.

According to an embodiment of the present application, the operating current value comprises current waveform data of an operating current of the water pump 101. The parameter calculation model comprises a multiple linear regression model, and the multiple linear regression model is expressed as: $F=a*I+b*P+c$. wherein, I is the operating current value, P is the pipeline pressure value, and F is the pipeline flow rate value;

and a, b and c are constant coefficients of the multiple linear regression model.

According to an embodiment of the present application, the second obtaining module 512 is configured to obtain a sample data set, and the sample data set comprises a plurality of groups of operating current sample data and corresponding operating parameter sample data. The second obtaining module 512 takes the operating current sample data as an input of an initial calculation model, takes the corresponding operating parameter sample data as an expected output of the initial calculation model, and performs parameter calculation constraint training on the initial calculation model to obtain the parameter calculation model.

According to an embodiment of the present application, a liquid flow rate in a pipeline between the water pump 101 and a throttle valve 102 is adjusted by controlling the throttle valve 102 to collect a sample data set. And the throttle valve 102 is disposed downstream of the water pump 101. The operating current sample data is obtained by a current sampling module, and the operating parameter sample data is obtained by a pressure sensor and/or a flow meter.

According to an embodiment of the present application, the preset calculation rule comprises a preset correspondence relationship. The second obtaining module 512 determines an operating parameter value corresponding to the operating current value based on the preset correspondence relationship. The preset correspondence relationship indicates a correspondence relationship between the operating current value and the operating parameter value.

According to an embodiment of the present application, the second obtaining module 512 is further configured to adjust a liquid flow rate in a pipeline between the water pump 101 and a throttle valve 102 by controlling the throttle valve 102 to obtain a plurality of operating current sample data under different liquid flow rate conditions; obtain a plurality of operating parameter sample data corresponding to the plurality of operating current sample data; and construct a preset correspondence relationship based on the plurality of operating current sample data and the corresponding plurality of operating parameter sample data.

Herein, the throttle valve 102 is disposed downstream of the water pump 101. The operating current sample data is obtained by a current sampling module. The operating parameter sample data is obtained by a pressure sensor and/or a flow meter.

According to an embodiment of the present application, the preset correspondence relationship comprises a data table. The second obtaining module 512 is further configured to determine a corresponding operating parameter value by interpolation calculation based on the operating current value and the data table.

According to an embodiment of the present application, the first obtaining module 511 is configured to obtain the operating current value of the water pump

101 at a preset time interval.

According to an embodiment of the present application, the first obtaining module 511 is configured to determine whether the operating current value exceeds a preset current range; and when the operating current value exceeds the preset current range, determine that the water pump 101 is in an abnormal working state and then send a warning message.

According to an embodiment of the present application, a device configured to regulate an operating parameter value comprises the water pump 101 and/or a throttle valve 102. The regulating module 513 is configured to, when the operating parameter value is out of a preset threshold range, adjust the water pump 101 and/or the throttle valve 102 to obtain an updated operating current value. The updated operating parameter value is determined based on the updated operating current value and the preset calculation rule, until the updated operating parameter value is within the preset threshold range.

It should be understood that, for specific working processes and functions of the first obtaining module 511, the second obtaining module 512, the regulating module 513 and the extraction module 514 in the above embodiments, reference may be made to the description in the method of preparing drinking solution provided in the above embodiments of FIGS. 1 to 4, which will not be repeated here to avoid repetition.

An embodiment of the present application further provides a computer program product, comprising a computer program. The computer program is used for executing the steps of the method of preparing drinking solution in the foregoing method embodiment, and for details, reference may be made to the foregoing method embodiment, which is not described herein again.

The computer program product may be implemented specifically by hardware, software or a combination thereof. In an optional embodiment, the computer program product is specifically embodied as a computer storage medium. In another optional embodiment, the computer program produc1t is embodied as a software product, for example, a software development kit (SDK) or the like.

All the above optional technical solutions may be combined in any way to form optional embodiments of the present application, which are not described one by one here.

Those skilled in the art can realize that the units and algorithm steps of the examples described in the embodiments disclosed herein can be implemented by electronic hardware, or a combination of computer software and electronic hardware. Whether these functions are performed in hardware or software depends on the specific application and design constraints of the technical solution. Professionals can use different methods for each specific application to implement the described functions, but such implementation should not be considered to be beyond the scope of the present application.

Those skilled in the art can clearly understand that, for the convenience and brevity of description, for the specific working process of the system and unit described above, reference can be made to the corresponding process in the foregoing method embodiment, and details are not described herein again.

In the several embodiments provided in the present application, it should be understood that the disclosed systems and methods may be implemented in other ways. For example, the embodiments described above are merely schematic, for example, the division of the units is merely a logical function division, and there may be other division manners in actual implementation, for example, a plurality of units or components may be combined or may be integrated into another system, or some features may be ignored or not executed. In addition, the mutual coupling or direct coupling or communication connection shown or discussed may be3 through some interfaces, and the indirect coupling or communication connection of the units may be in an electrical, mechanical or other form.

The units described as separate components may or may not be physically separate, and the components displayed as units may or may not be physical units, that is, they may be located in one place, or may be distributed on a plurality of network units. Some or all of the units may be selected according to actual needs to achieve the purpose of the solution of the embodiment.

In addition, each functional unit in each embodiment of the present application may be integrated into one processing unit, or each unit may exist alone physically, or two or more units may be integrated into one unit.

The functions may be stored in a computer-readable storage medium if they are implemented in the form of a software functional unit and sold or used as an independent product. Based on such an understanding, the technical solution of the present application essentially or the part contributing to the prior art or a part of the technical solution may be embodied in the form of a software product. The computer software product is stored in a storage medium and includes several instructions for instructing a computer device (which may be a personal computer, a server, or a network device, etc.) to perform all or a part of the steps of the method described in the embodiments of the present application. The foregoing storage medium includes: a U disk, a mobile hard disk, a read-only memory (ROM), a random access memory (RAM), a magnetic disk, or an optical disk, and various media that can store program codes.

It should be noted that, in the description of the present application, the terms "first", "second", "third", etc. are only for descriptive purposes, and cannot be understood as indicating or implying relative importance. "A or B" includes A or B or both (A and B). In addition, in the description of the present application, unless otherwise specified, "a plurality of" means two or more.

The above description is only a preferred embodiment of the present application, and is not intended to limit the present application.

**Claims**

1. A method of preparing drinking solution, **characterized in that**, the method comprising:

   obtaining an operating current value of a water pump (101) of a beverage machine (100);
   determining a current operating parameter value based on the operating current value and a preset calculation rule, wherein the operating parameter value characterizes an extraction condition of the drinking solution, the preset calculation rule includes a predetermined numerical correspondence between the operating parameter value and the operating current value;
   when the operating parameter value does not meet a preset threshold range, adjusting a device of the beverage machine (100) configured to regulate the operating parameter value to obtain an updated operating parameter value;
   performing extraction under a condition corresponding to the updated operating parameter value to obtain the drinking solution.

2. The method according to claim 1, wherein the drinking solution is extracted by a brewing unit (105) of the beverage machine (100), a pipeline is connected between the water pump (101) and the brewing unit (105), and the operating parameter value comprises: a pipeline pressure value and/or a pipeline flow rate value of the pipeline.

3. The method according to claim 1, wherein the operating current value is obtained by a current detection module (103) of the beverage machine (100), wherein the current detection module (103) comprises a current coupler (1031), a current-to-voltage converter (1032) and an analog signal processing module.

4. The method according to claim 2, wherein the preset calculation rule comprises a parameter calculation model, and the determining the current operating parameter value based on the operating current value and the preset calculation rule comprises:
   inputting the operating current value into the parameter calculation model to obtain the operating parameter value.

5. The method according to claim 4, wherein the operating current value comprises current waveform data of the operating current of the water pump (101), the parameter calculation model comprises a multiple linear regression model, and the multiple linear regression model is expressed as:

$$F=a*I+b*P+c$$

   wherein I is the operating current value, P is the pipeline pressure value, F is the pipeline flow rate value;
   a, b and c are constant coefficients of the multiple linear regression model;
   or, the parameter calculation model comprises a general model, and the general model is a neural network model;
   or, the parameter calculation model comprises an input layer (401), multiple hidden layers (402, 403, 404) and an output layer (405); the input layer (401) is configured to receive current waveform data during operation of the water pump (101), wherein the current waveform data indicates the operating current value; the hidden layer (402, 403, 404) is configured to process and extract features from the received current waveform data; the output layer (405) is configured to predict a pipeline flow rate and/or a pipeline pressure to generate the pipeline flow rate value and/or the pipeline pressure value.

6. The method according to claim 4, wherein before inputting the operating current value into the parameter calculation model to obtain the operating parameter value, the method further comprises:

   obtaining a sample data set, wherein the sample data set comprises multiple groups of operating current sample data and corresponding operating parameter sample data;
   taking the operating current sample data as an input of an initial calculation model and taking the corresponding operating parameter sample data as an expected output of the initial calculation model, performing constraint training of parameter calculation on the initial calculation model to obtain the parameter calculation model.

7. The method according to claim 6, wherein the sample data set is obtained through the following way:

   controlling a throttle valve to adjust a liquid flow rate in a pipeline between the water pump (101) and the throttle valve to collect the sample data set, wherein the throttle valve is set downstream of the water pump (101);
   wherein the operating current sample data is obtained by a current sampling module, and the operating parameter sample data is obtained by a pressure sensor and/or a flow meter.

8. The method according to claim 2, wherein the preset calculation rule comprises a preset correspondence relationship, and the determining the current operating parameter value based on the operating current value and the preset calculation rule comprises: determining the operating parameter value corresponding to the operating current value based on the preset correspondence relationship, wherein the preset correspondence relationship indicates a correspondence relationship between the operating current value and the operating parameter value.

9. The method according to claim 8, wherein the preset correspondence relationship is determined through the following way:

controlling a throttle valve (102) to adjust a liquid flow rate in a pipeline between the water pump (101) and the throttle valve (102) to obtain multiple operating current sample data under different liquid flow rate conditions, wherein the throttle valve (102) is set downstream of the water pump (101), and the operating current sample data is obtained by a current sampling module; obtaining multiple operating parameter sample data corresponding to the multiple operating current sample data, wherein the operating parameter sample data is obtained by a pressure sensor and/or a flow meter; constructing the preset correspondence relationship based on the multiple operating current sample data and the corresponding multiple operating parameter sample data.

10. The method according to claim 8, wherein the preset correspondence relationship comprises a data table, and the determining the operating parameter value corresponding to the operating current value based on the preset correspondence relationship comprises: determining the corresponding operating parameter value through interpolation calculation based on the operating current value and the data table.

11. The method according to claim 1, wherein the obtaining the operating current value of the water pump (101) of the beverage machine (100) comprises: obtaining the operating current value of the water pump (101) at a preset time interval.

12. The method according to claim 1, wherein after obtaining the operating current value of the water pump (101) of the beverage machine (100), the method further comprises:

determining whether the operating current value exceeds a preset current range; when the operating current value exceeds the preset current range, determining that the water pump (101) is in an abnormal operating state and then sending a warning message.

13. The method according to any one of claims 1 to 12, wherein the device configured to regulate the operating parameter value comprises the water pump (101) and/or a throttle valve, and the adjusting the device of the beverage machine (100) configured to regulate the operating parameter value to obtain the updated operating parameter value when the operating parameter value does not meet the preset threshold range comprises:

when the operating parameter value exceeds the preset threshold range, adjusting the water pump (101) and/or the throttle valve (102) to obtain an updated operating current value; determining the updated operating parameter value based on the updated operating current value and the preset calculation rule, until the updated operating parameter value is within the preset threshold range.

14. A beverage machine, **characterized in that** the beverage machine comprising:

a water pump (101); a processor (510), comprising a first obtaining module (511), a second obtaining module (512), a regulating module (513) and an extraction module (514), wherein the first obtaining module (511) is configured to obtain an operating current value of the water pump (101) of the beverage machine (100); the second obtaining module (512) is configured to determine a current operating parameter value based on the operating current value and a preset calculation rule, wherein the operating parameter value characterizes an extraction condition of the drinking solution, the preset calculation rule includes a predetermined numerical correspondence between the operating parameter value and the operating current value; the regulating module (513) is configured to, when the operating parameter value does not meet a preset threshold range, adjust a device of the beverage machine (100) configured to regulate the operating parameter value to obtain an updated operating parameter value; the extraction module (514) is configured to perform extraction under a condition corresponding to the updated operating parameter value to obtain the drinking solution; a storage resource, configured to store processor-executable instructions; wherein, the processor (510) is configured to perform the method of preparing drinking solution according to any one of claims 1 to 13.

**15.** A computer program product, comprising a computer program, **characterized in that**, when the computer program is executed by a processor, the method of preparing drinking solution according to any one of claims 1 to 13 is implemented.

EP 4 699 498 A1

Fig.1

16

obtaining an operating current value of a water pump of a beverage machine — S210

determining a current operating parameter value based on the operating current value and a preset calculation rule — S220

when the operating parameter value does not meet a preset threshold range, adjusting a device of the beverage machine configured to regulate the operating parameter value to obtain an updated operating parameter value — S230

performing extraction under a condition corresponding to the updated operating parameter value to obtain the drinking solution — S240

Fig.2

300

| operating current | pipeline pressure | pipeline flow rate |
|---|---|---|
| 1.38A | 8bar | 2.7m/s |
| 1.33A | 9bar | 3.1m/s |
| 1.28A | 10bar | 3.5m/s |
| 1.23A | 11bar | 4.1m/s |
| 1.18A | 12bar | 4.5m/s |
| 1.13A | 13bar | 4.8m/s |
| 1.08A | 14bar | 5.3m/s |

Fig.3

401
input layer receiving current waveform data

402
hidden layer 1 process and extract features

403
hidden layer 2 process and extract features

404
hidden layer N process and extract features

405
output layer predicted value of a pipeline flow rate or a pipeline pressure

Fig.4

100

first obtaining
module 511

second obtaining
module 512

regulating module
513

extraction module
514

processor 510

520

memory

101

water
pump

Fig.5

Europäisches
Patentamt
European
Patent Office
Office européen
des brevets

# EUROPEAN SEARCH REPORT

**Application Number**

EP 25 19 5535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 562 421 A (GREE ELECTRIC APPLIANCES INC ZHUHAI) 20 February 2024 (2024-02-20) | 1-4,6-15 | INV. A47J31/52 |
| A | * paragraph [0030] - paragraph [0093]; figure 1 * | 5 | |
| X | CN 114 828 705 A (KONINKLIJKE PHILIPS NV) 29 July 2022 (2022-07-29) * paragraph [0081] - paragraph [0115]; figure 1 * | 1,14,15 | |
| X | US 2014/272025 A1 (WHEELER DAVID [US]) 18 September 2014 (2014-09-18) * paragraph [0031] - paragraph [0085]; figures 1-4 * | 1,14,15 | |

**TECHNICAL FIELDS SEARCHED (IPC)**

A47J

The present search report has been drawn up for all claims

| Place of search | Date of completion of the search | Examiner |
|---|---|---|
| Munich | 20 November 2025 | Vuc, Arianda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 699 498 A1**

## ANNEX TO THE EUROPEAN SEARCH REPORT
## ON EUROPEAN PATENT APPLICATION NO.

EP 25 19 5535

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2025

| Patent document cited in search report | | Publication date | Patent family member(s) | | Publication date |
|---|---|---|---|---|---|
| CN 117562421 | A | 20-02-2024 | NONE | | |
| CN 114828705 | A | 29-07-2022 | CN | 114828705 A | 29-07-2022 |
| | | | EP | 3838082 A1 | 23-06-2021 |
| | | | EP | 4076109 A1 | 26-10-2022 |
| | | | PL | 4076109 T3 | 05-08-2024 |
| | | | US | 2023012837 A1 | 19-01-2023 |
| | | | WO | 2021122782 A1 | 24-06-2021 |
| US 2014272025 | A1 | 18-09-2014 | NONE | | |

EPO FORM P0459

For more details about this annex : see Official Journal of the European Patent Office, No. 12/82